# FASCICULE DE BREVET EUROPEEN

(11) **EP 0 497 655 B1**
(45) Date de publication et mention de la délivrance du brevet: **13.07.1994**
(21) Numéro de dépôt: 92400143.1
(22) Date de dépôt: 20.01.1992
(51) Int. Cl.: B60B 7/06, F16B 21/07

(54) **Enjoliveur de roue, notamment de véhicule automobile**
Radzierblende, insbesondere für Kraftfahrzeuge
Wheel cover, especially for vehicle wheels

(30) Priorité: 29.01.1991 FR 9100970
(43) Date de publication de la demande: 05.08.1992
(73) Titulaire: ATTAX, F-78400 Chatou (FR)
(72) Inventeur: Dubost, Dominique, F-78170 La Celle Saint Cloud (FR)
(74) Mandataire: Habasque, Etienne Joel Jean-François

(56) Documents cités:
- FR-A- 570 222
- US-A- 2 737 406
- US-A- 4 707 035

## Description

La présente invention concerne un enjoliveur de roue notamment de véhicule automobile.

On connait déjà dans l'état de la technique des enjoliveurs de roue de véhicule automobile, qui comportent une face avant et une face arrière munie de moyens d'accrochage sur des organes de fixation de la roue sur un moyeu du véhicule.

Ces moyens d'accrochage sont en général constitués par des plots d'accrochage munis de branches déformables élastiquement à l'extrémité de chacune desquelles est prévue une portion d'accrochage en saillie vers l'intérieur du plot, et adaptée pour coopérer avec une surface de butée de l'organe de fixation de la roue sur le moyeu, pour accrocher l'enjoliveur sur la roue (cF. US-A-4707035).

Lors de la mise en place ou du retrait de l'enjoliveur, les branches de chaque plot d'accrochage se déforment élastiquement pour franchir la tête de l'organe de fixation.

Cependant, ces enjoliveurs présentent un certain nombre d'inconvénients dans la mesure où leur accrochage sur la roue est peu fiable et leur montage et leur démontage relativement difficiles.

Le but de l'invention est donc de résoudre ces problèmes en proposant un enjoliveur de roue qui puisse être monté et démonté très facilement et qui soit accroché de manière très fiable sur la roue.

A cet effet, l'invention a pour objet un enjoliveur de roue, notamment de véhicule automobile, du type comportant une face avant et une face arrière munie de moyens d'accrochage sur des organes de fixation de la roue sur un moyeu du véhicule, caractérisé en ce que chaque moyen d'accrochage comprend un premier manchon relié à la face arrière de l'enjoliveur et dans lequel est monté déplaçable axialement un second manchon coaxial au premier et comportant un fond muni d'une surface de butée et des branches élastiquement déformables, à l'extrémité de chacune desquelles est prévue une portion d'accrochage en saillie vers l'intérieur du manchon, le second manchon étant déplaçable dans le premier, par appui de la tête de l'organe de fixation sur la surface de butée, entre une position de montage et de démontage de l'enjoliveur sur la roue, dans laquelle les branches de celui-ci s'étendent hors du premier manchon et une position d'accrochage, dans laquelle les branches du second manchon s'étendent autour de la tête de l'organe de fixation, à l'intérieur du premier manchon et les portions d'accrochage de celles-ci coopèrent avec une surface de butée de la tête de l'organe de fixation pour accrocher l'enjoliveur sur la roue, et en ce qu'il est prévu des moyens escamotables de blocage du second manchon par rapport au premier, en positions de montage et de démontage ou d'accrochage.

Avantageusement, les moyens de blocage comprennent des parties en saillie vers l'intérieur du premier manchon, à l'extrémité de branches de celui-ci et adaptées pour s'engager dans des évidements correspondants ménagés à proximité des extrémités du second manchon.

Avantageusement également, les portions d'accrochage de l'extrémité des branches du second manchon comportent des faces inclinées facilitant le montage ou le démontage de l'enjoliveur et coopérant avec une surface de butée tronconique de l'organe de fixation, lorsque la tête de cet organe de fixation est en appui sur la surface de butée du second manchon, pour accrocher sous contrainte l'enjoliveur sur l'organe de fixation.

L'invention sera mieux comprise à l'aide de la description qui va suivre, donnée uniquement à titre d'exemple et faite en se référant aux dessins annexés, sur lesquels :

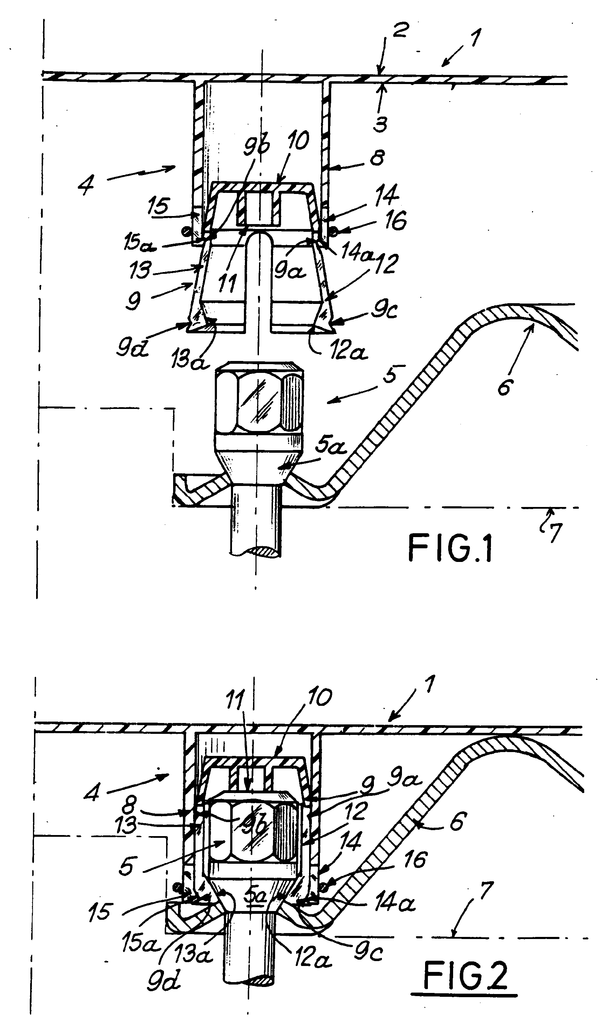

- les Fig.1 et 2 représentent des vues en coupe d'un enjoliveur selon l'invention, respectivement en position de montage et en position d'accrochage sur la roue.

Ainsi qu'on peut le voir sur ces figures, un enjoliveur de roue, notamment de véhicule automobile, désigné par la référence générale 1, comporte une face avant 2 et une face arrière 3.

La face arrière de cet enjoliveur est munie de moyens d'accrochage 4 sur des organes 5 de fixation de la roue 6 sur un moyeu du véhicule, désigné par la référence générale 7. Ces organes de fixation peuvent être constitués par des vis ou des écrous coopérant avec des goujons.

Selon l'invention, chaque moyen d'accrochage comporte un premier manchon 8 relié à la face arrière de l'enjoliveur et dans lequel est monté déplaçable axialement un second manchon 9 coaxial au premier.

Ce second manchon 9 comporte un fond 10 muni d'une surface de butée 11, par exemple en saillie à partir de ce fond et des branches par exemple 12 et 13 élastiquement déformables, à l'extrémité de chacune desquelles est prévue une portion d'accrochage respectivement 12a et 13a en saillie vers l'intérieur de ce second manchon 9.

Comme on peut le voir, le second manchon 9 est monté déplaçable par rapport au premier 8, entre une position de montage ou de démontage de l'enjoliveur sur la roue, représentée sur la figure 1, dans laquelle les branches 12, 13 du second manchon s'étendent hors du premier manchon pour permettre le passage de la tête de l'organe de fixation entre celles-ci et une position d'accrochage de l'enjoliveur sur la roue, représentée sur la Fig.2, dans laquelle les branches 12 et 13 de ce second manchon 9 s'étendent autour de la tête de l'organe de fixation, à l'intérieur du premier manchon et les portions d'accrochage 12a et 13a des branches 12 et 13 de ce second manchon, coopèrent avec une surface de butée 5a de l'organe de fixation pour accrocher l'enjoliveur sur la roue.

On notera en regard de la Fig.1 qu'en position de montage ou de démontage, le second manchon 9 présente une forme générale évasée ouverte en direction de l'organe de fixation permettant un engagement aisé de ce second manchon 9 autour de la tête de l'organe de fixation 5 lors de la mise en place de l'enjoliveur.

Une fois que ce second manchon 9 est engagé autour de la tête de l'organe de fixation 5, celle-ci vient en appui contre la surface de butée 11 prévue au fond 10 de ce second manchon 9, de sorte que si l'utilisateur poursuit son action sur l'enjoliveur, pour l'accrocher sur la roue, ce second manchon 9 se déplace axialement à l'intérieur du premier manchon 8. Ceci provoque le rapprochement des branches 12 et 13 de ce second manchon et donc l'engagement des portions d'accrochage 12a et 13a de celles-ci, contre la surface de butée 5a de l'organe de fixation.

On notera que cette surface de butée 5a de l'organe de fixation peut être tronconique et que les portions d'accrochage 12a et 13a à l'extrémité des branches 12 et 13 du second manchon 9, peuvent comporter des faces inclinées, facilitant le montage ou le démontage de l'enjoliveur et coopérant avec cette surface de butée tronconique 5a de l'organe de fixation pour, lorsque la tête de cet organe est en appui sur la surface de butée du fond du second manchon, accrocher sous contrainte l'enjoliveur sur la roue.

En effet, cette structure permet de créer une contrainte de fixation entre la tête de l'organe de fixation, la surface de butée 11 du fond 10 du manchon 9 et les portions d'accrochage 12a et 13a en appui sur la surface de butée tronconique 5a de l'organe de fixation.

On notera également qu'il est prévu des moyens escamotables de blocage du second manchon 9 par rapport au premier 8 en positions de montage et de démontage ou d'accrochage.

En effet, le premier manchon 8 peut également comporter des branches 14 et 15 à l'extrémité de chacune desquelles est prévue une partie en saillie 14a et 15a vers l'intérieur du premier manchon, ces parties en saillie étant adaptées pour coopérer avec des évidements 9a, 9b, 9c et 9d du second manchon, ménagés à proximité de chaque extrémité de celui-ci.

Ainsi, dans la position de montage et de démontage de l'enjoliveur, représentée sur la figure 1, les portions repliées 14a et 15a des branches 14 et 15 du premier manchon 8, s'engagent dans les évidements 9a et 9b ménagés à l'une des extrémités du second manchon, tandis qu'en position d'accrochage, ces parties en saillie s'engagent dans les évidements 9c, 9d ménagés à l'autre extrémité du second manchon.

On conçoit ainsi qu'en position de montage ou de démontage, le second manchon 9 est maintenu par rapport au premier 8, en position ouverte, pour faciliter le passage de ce second manchon autour de la tête de l'organe de fixation 5; jusqu'à ce que cette tête vienne en appui contre la surface de butée 11 au fond de ce second manchon.

Lors de la poursuite du déplacement de l'enjoliveur, cette tête entraîne un déplacement axial du second manchon 9 à l'intérieur du premier manchon 8, de sorte que les branches élastiques 12, 13 de celui-ci se rapprochent et les portions repliées 12a, 13a de celles-ci viennent en appui contre la surface de butée 5a de la tête de l'organe de fixation, les parties en saillie 14a et 15a des branches 14 et 15 du premier manchon 8, s'engageant dans les évidements 9c et 9d de l'autre extrémité du second manchon pour le bloquer en position à l'intérieur du premier manchon et donc maintenir l'enjoliveur en position par rapport à la roue du véhicule.

On notera également qu'un anneau élastique 16 peut être prévu autour des branches 14 et 15 du premier manchon 8 pour augmenter la force de maintien du second manchon dans le premier manchon.

On conçoit que ces moyens de blocage du second manchon dans le premier manchon associés aux portions repliées d'accrochage 12a et 13a des branches 12 et 13 du second manchon, permettent de mettre ce second manchon sous contrainte entre ces portions repliées et la surface de butée du fond du second manchon pour assurer un maintien sans jeu de l'enjoliveur en position sur les organes de fixation et donc par rapport à la roue.

Les différents organes des moyens d'accrochage qui viennent d'être décrits peuvent par exemple être réalisés en matière plastique ou autre.

## Revendications

1. Enjoliveur de roue, notamment de véhicule automobile, du type comportant une face avant (2) et une face arrière (3) munie de moyens (4) d'accrochage sur des organes (5) de fixation de la roue sur un moyeu du véhicule, caractérisé en ce que chaque moyen d'accrochage comprend un premier manchon (8) relié à la face arrière de l'enjoliveur (1) et dans lequel est monté déplaçable axialement un second manchon (9) coaxial au premier et comportant un fond (10) muni d'une surface de butée (11) et des branches (12,13) élastiquement déformables, à l'extrémité de chacune desquelles est prévue une portion d'accrochage (14,15) en saillie vers l'intérieur du manchon, le second manchon étant déplaçable dans le premier, par appui de la tête de l'organe de fixation (5) sur la surface de butée (11), entre une position de montage et de démontage de l'enjoliveur sur la roue, dans laquelle les branches (12,13) de celui-ci s'étendent hors du premier manchon (8) et une position d'accrochage, dans laquelle les branches du second manchon (9) s'étendent autour de la tête de l'organe de fixation, à l'intérieur du premier manchon (8) et les portions d'accrochage (12a,13a) de celles-ci coopèrent avec une surface de butée (5a) de l'organe de fixation (5) pour accrocher l'enjoliveur sur la roue, et en ce qu'il est prévu des moyens escamotables (14,15; 14a, 15a, 9a, 9b, 9c, 9d) de blocage du second manchon (9) par rapport au premier (8), en positions de montage et de démontage ou d'accrochage.

2. Enjoliveur selon la revendication 1, caractérisé en ce que les moyens de blocage comprennent des parties en saillie (14a, 15a) vers l'intérieur du premier manchon (8) à l'extrémité de branches (14, 15) de celui-ci et adaptées pour s'engager dans des évidements correspondants (9a,9b,9c,9d) ménagés à proximité des extrémités du second manchon (9).

3. Enjoliveur selon l'une quelconque des revendications précédentes, caractérisé en ce que les portions d'accrochage (12a, 13a) à l'extrémité des branches (12,13) du second manchon (9), comportent des faces inclinées facilitant le montage et le démontage de l'enjoliveur et coopérant avec une surface de butée tronconique (5a) de l'organe de fixation (5) lorsque la tête de cet organe de fixation est en appui sur la surface de butée (10) du second manchon, pour accrocher sous contrainte l'enjoliveur sur l'organe de fixation.

4. Enjoliveur selon l'une quelconque des revendications précédentes, caractérisé en ce qu'en position de montage ou de démontage, le second manchon (9) présente une forme générale évasée ouverte en direction de l'organe de fixation.

## Patentansprüche

1. Radzierblende, insbesondere für Kraftfahrzeuge, mit einer Vorderseite (2) und einer Rückseite (3), ausgestattet mit Mitteln (4) zum Einhängen in Elemente (5) zur Befestigung des Rades auf einer Fahrzeugradnabe, **dadurch gekennzeichnet, daß** jedes Befestigungsmittel eine mit der Rückseite der Zierblende (1) verbundene erste Muffe (8) aufweist, an der axial beweglich eine zweite Muffe (9) koaxial zur ersten angebracht ist, und einen Boden (10) mit einer Anschlagfläche (11) sowie elastisch verformbare Bügel (12, 13) aufweist, an deren Enden jeweils ein Teil der Einhängung (14, 15) als Überhang in das Innere der zweiten Muffe (9) vorgesehen ist, wobei die zweite Muffe (9) innerhalb der ersten beweglich ist, und zwar durch Drücken des Kopfes des Befestigungselementes (5) auf die Anschlagfläche (11), zwischen der Position Montieren und Demontieren der Zierblende am bzw. vom Rad, bei welcher ihre Bügel (12, 13) aus der ersten Muffe (8) bis zur Position Einhängen herausragen, und bei welcher die Bügel der zweiten Muffe (9) um den Kopf des Befestigungselementes (5) herum angeordnet sind, im Inneren der ersten Muffe (8) und deren Teile der Einhängung (12a, 13a) mit einer Anschlagfläche (5a) des Befestigungselementes (5) zum Einhängen der Zierblende am Rad zusammenwirken, und dadurch, daß ausklappbare Arretierungsmittel (14, 15, 14a, 15a, 9a, 9b, 9c, 9d) der zweiten Muffe (9) in Bezug auf die erste (8) vorgesehen sind, und zwar in den Positionen Montieren, Demontieren oder Einhängen.

2. Radzierblende nach Anspruch 1, **dadurch gekennzeichnet, daß** die Arretierungsmittel Teile als Überhang (14a, 15a) in das Innere der ersten Muffe (8) an den Enden ihrer Bügel (14, 15) besitzen, die dazu geeignet sind, sich in entsprechende, in der Nähe der Enden der zweiten Muffe (9) eingelassene Aussparungen (9a, 9b, 9c, 9d) zu setzen.

3. Radzierblende nach einem der vorstehenden Ansprüche, **dadurch gekennzeichnet, daß** die Teile der Einhängung (12a, 13a) am Ende der Bügel (12, 13) der zweiten Muffe (9) Schrägen besitzen, die das Montieren und Demontieren der Zierblende erleichtern und mit einer kegelstumpfförmigen Anschlagfläche (5a) des Befestigungselementes (5) zusammenwirken, wenn der Kopf dieses Befestigungselementes (5) auf die Anschlagfläche (10) der zweiten Muffe drückt, um mit Spannung die Zierblende an dem Befestigungselement einzuhängen.

4. Radierblende nach einem der vorstehenden Ansprüche, **dadurch gekennzeichnet, daß** die zweite Muffe (9) in der Position Montieren oder Demontieren eine auslaufende, sich in Richtung des Befestigungselementes (5) öffnende allgemeine Form aufweist.

## Claims

1. A hub cap, particularly for a motor vehicle, of the type comprising a front surface (2) and a rear surface (3), provided with means (4) for coupling to bodies (5) for securing a wheel on a hub of the vehicle, **characterised in that** each coupling means comprises a first sleeve (8) connected to the rear surface of the hub cap (1), and a second sleeve (9) is mounted inside the first sleeve, coaxially therewith, so as to be axially displaceable, and comprises a base (10) provided with a stop surface (11) and resiliently deformable limbs (12, 13), a coupling portion (14, 15) being provided at the end of each limb and projecting towards the interior of the sleeve, and, through the support of the head of the securing body (5) against the stop surface (11), the second sleeve is displaceable within the first, between an assembly and removal position of the hub cap on the wheel, wherein the limbs (12, 13) extend beyond the first sleeve (8), and a coupled position, wherein the limbs of the second sleeve (9) extend about the head of the securing body at the interior of the first sleeve (8), and the coupling portions (12a, 13a) of the said limbs co-operate with a stop surface (5a) on the securing body (5) to couple the hub cap on to the wheel, and retractable means (14, 15, 14a, 15a, 9a, 9b, 9c, 9d) are provided to lock the second sleeve (9) in relation to the first (8), in an assembly and removal position, or in coupled position.

2. A hub cap in accordance with claim 1, **characterised in that** the locking means comprise parts (14a, 15a) projecting towards the interior of the first sleeve (8) at the end of the limbs (14, 15) thereof, and adapted so as to engage in corresponding recesses (9a, 9b, 9c, 9d) provided in the vicinity of the ends of the second sleeve (9).

3. A hub cap in accordance with any one of the preceding claims, **characterised in that** the coupling portions (12a, 13a) at the end of the limbs (12, 13) of the second sleeve (9) comprise angled surfaces which facilitate assembly and removal of the hub cap, and co-operate with a truncated conical stop surface (5a) of the securing body (5) when the head of the said securing body is supported against the stop surface (10) of the second sleeve, in order for the hub cap to be coupled under stress to the securing body.

4. A hub cap in accordance with any one of the preceding claims, **characterised in that** in the assembly or removal position the second sleeve (9) is generally funnel-shaped and open in the direction of the securing body.
